# EUROPEAN PATENT APPLICATION

(11) **EP 1 700 829 A1**
(43) Date of publication of application: **13.09.2006**
(21) Application number: 05005094.7
(22) Date of filing: 09.03.2005
(51) Int. Cl.: C03B 19/12

(54) **Process for the production of glass-monoliths by means of the sol-gel process**

(71) Applicant: Degussa AG, 40474 Düsseldorf (DE)
(72) Inventor: Oswald, Monika, Dr., 63454 Hanau (DE); Deller, Klaus, Dr., 63512 Hainburg (DE)

(57) **Abstract**

Method for fabricating a glass monolith by the sol-gel process, in which a pyrogenically produced silica (fumed silica) is used in the form of a powder and/or a dispersion, characterized in that as pyrogenically produced silica (fumed silica) a silica (fumed silica) deriving from the group
- highly pure, pyrogenically produced silica (fumed silica) with a metal content of lower than 9 ppm and/or
- a pyrogenically prepared silicon dioxide powder having
   - a BET surface area of 30 to 90 m²/g,
   - a DBP number of 80 or less,
   - an average aggregate area of less than 25,000 nm²,
   - an average aggregate circumference of less than 1,000 nm, at least 70% of the aggregates having a circumference of less than 1,300 nm
is used.

## Description

The invention relates to a process for the production of glass-monoliths by means of the sol-gel process.

In general, many methods have been suggested to fabricate a glass monolith by a sol-gel process. Example of some sol-gel processes are found in U.S. Pat. No. 4,419,115 to David W. Johnson, et al., entitled Fabrication Of Sintered High-Silica Glasses, discusses a two-step gelling process for the fabrication of sintered high-silica glass wherein fumed silica is mixed with deionized water to form a first gel not in need of pH adjustment. This first gel is then dried, wherein the drying may occur in a humidity controlled environment. The dried first gel is thermally treated to raise the temperature of the dried first gel in the vicinity of 750 to 850 degrees Celsius and then cooled, then the cooled dried first gel is then fragmented, redispersed in deionized water and placed in a closed mold to form a second gel, which is then dried and sintered to form a glass monolith. Also described therein is a pH adjusting step of adding boric acid to the deionized water to decrease the pH which lowers the gelling rate and that a further decrease in pH will increase the gelling rate.

U.S. Pat. No. 4,680,046 to Nobutaka Matsuo, et al., entitled, Method of Preparing Preforms For optical Fibers, describes a sol-gel process for forming preforms for optical fibers wherein the pH of one sol solution was adjusted by the addition of ammonia water and water. Another sol solution was prepared by including alcohol (anhydrous ethanol); and this sol solution had the pH adjusted by the addition of hydrochloric acid and then readjusted by the addition of ammonia water and water.

Silica glass, while generally more expensive than many other inorganic glasses, finds many uses based an its excellent properties. These include transparency, chemical inertness, low thermal expansion, thermal stability, and strength. Well-known uses for silica glass, as based an such properties, include optical fiber; optical elements - lenses and mirrors; beakers, muffles, crucibles and other containers profiting by chemical and thermal stability; and windows for use in high temperature environments, e.g., partitioning windows between regions of different temperatures, in which advantage is taken of tolerance not only for high temperature, but for significant temperature gradients as well.

Workers in the different field are well aware of the economy to be realized e.g. in overcladding fabrication by use of an alternative procedure - by use of "sol-gel". This well-known procedure described, for example, in J. Zarzycki, "The Gel-Glass Process", pp. 203-31 in Glass: Current Issues, A. F Wright and J. Dupois, eds., Martinus Nijoff, Boston, MA. (1985), is seen as far less costly than procedures now in use.

It is also known that monoliths of silicon dioxide are produced by means of the sol-gel method by adding a tetraalkylammonium hydroxide, as a stabilizing agent, to a silicon dioxide dispersion, adjusting the isoelectric point by addition of ammonium hydroxide or an amine, establishing a pH of greater than 10.5, allowing the dispersion to gel and drying the gel body (US 6,209,357).

It is furthermore known to produce a shaped silicon dioxide glass article by means of the sol-gel method by preparing a silicon dioxide sol by hydrolysis of silicon alkoxide, mixing this sol with silicon particles, allowing the mixture to gel, drying the gel, sintering the dried gel in order to close the pores in the dried gel and then heating the sintered gel to a temperature of between 1,500 and 2,000 ºC (US 5,236,483).

It is furthermore known to produce synthetic glass by preparing a paste having a pH of less than 2.2 from pyrogenically prepared silica, water and acid, mixing alkoxysilane into this paste, adding a base in order to establish a pH of 2.8 to 3.6, forming a gel from the sol, drying the gel under supercritical conditions, heating the dried gel first at a temperature of 950 to 1,200 ºC in a chlorine gas atmosphere and then in a chlorine-free atmosphere, in order to free the dried gel from the chlorine, and subsequently heating the gel to a temperature which is sufficient to convert the gel into a silicon dioxide glass (WO 02/074704).

It is furthermore known to produce objects from synthetic silicon dioxide glass by mixing an aqueous suspension of silicon dioxide with a silicon alkoxide solution, hydrolysing the mixture to form a sol, gelling the sol to form a wet sol-gel, drying the wet gel to form a dry gel and sintering the dry gel to form an object (WO 01/053225).

Subject of the invention is a method for fabricating a glass-monolith by the sol-gel process, in which a pyrogenically produced silica (fumed silica) is used in the form of a powder and/or a dispersion, characterized in that as pyrogenically produced silica (fumed silica) a silica (fumed silica) deriving from the group
- highly pure, pyrogenically produced silica (fumed silica) with a metal content of lower than 9 ppm and/or
- a pyrogenically prepared silicon dioxide powder (fumed silica) having
   - a BET surface area of 30 to 90 m²/g,
   - a DBP number of 80 or less,
   - an average aggregate area of less than 25,000 nm²,
   - an average aggregate circumference of less than 1,000, at least 70 % of the aggregates having a circumference of less than 1,300 nm,
is used.

In the case of particularly high purity requirements of the glass, a highly pure, pyrogenically prepared silicon dioxide which is characterized by a content of metals of less than 9 ppm can furthermore be employed as the oxide of metals and/or metalloids. It is described in the patent application DE 103 42 828.3.

In a preferred embodiment of the invention, the highly pure, pyrogenically prepared silicon dioxide can be characterized by the following content of metals:

| | | | |
|---|---|---|---|
| Li | ppb | < = | 10 |
| Na | ppb | < = | 80 |
| K | ppb | < = | 80 |
| Mg | ppb | < = | 20 |
| Ca | ppb | < = | 300 |
| Fe | ppb | < = | 800 |
| Cu | ppb | < = | 10 |
| Ni | ppb | < = | 800 |
| Cr | ppb | < = | 250 |
| Mn | ppb | < = | 20 |
| Ti | ppb | < = | 200 |
| Al | ppb | < = | 600 |
| Zr | ppb | < = | 80 |
| V | ppb | < = | 5 |

The total metal content can then be 3,252 ppb (-3.2 ppm) or less.

In a further preferred embodiment of the invention, the highly pure pyrogenically prepared silicon dioxide can be characterized by the following content of metals:

| | | | |
|---|---|---|---|
| Li | ppb | < = | 1 |
| Na | ppb | < = | 50 |
| K | ppb | < = | 50 |
| Mg | ppb | < = | 10 |
| Ca | ppb | < = | 90 |
| Fe | ppb | < = | 200 |
| Cu | ppb | < = | 3 |
| Ni | ppb | < = | 80 |
| Cr | ppb | < = | 40 |
| Mn | ppb | < = | 5 |
| Ti | ppb | < = | 150 |
| Al | ppb | < = | 350 |
| Zr | ppb | < = | 3 |
| V | ppb | < = | 1 |

The total metal content can then be 1033 ppb (-1.03 ppm) or less.

The preparation of the highly pure, pyrogenically prepared silicon dioxide which can be employed according to the invention can be carried out by converting silicon tetrachloride into silicon dioxide by means of high temperature hydrolysis in a flame in a known manner and using here a silicon tetrachloride which has a metal content of less than 30 ppb.

In a preferred embodiment of the invention, a silicon tetrachloride which, in addition to silicon tetrachloride, has the following content of metals can be employed:

| | | | |
|---|---|---|---|
| Al | less than | 1 | ppb |
| B | less than | 3 | ppb |
| Ca | less than | 5 | ppb |
| Co | less than | 0.1 | ppb |
| Cr | less than | 0.2 | ppb |
| Cu | less than | 0.1 | ppb |
| Fe | less than | 0.5 | ppb |
| K | less than | 1 | ppb |
| Mg | less than | 1 | ppb |
| Mn | less than | 0.1 | ppb |
| Mo | less than | 0.2 | ppb |
| Na | less than | 1 | ppb |
| Ni | less than | 0.2 | ppb |
| Ti | less than | 0.5 | ppb |
| Zn | less than | 1 | ppb |
| Zr | less than | 0.5 | ppb |

Silicon tetrachloride having this low metal content can be prepared in accordance with DE 100 30 251 or in accordance with DE 100 30 252.

The main process for the preparation of pyrogenic silicon dioxide starting from silicon tetrachloride, which is reacted in a mixture with hydrogen and oxygen, is known from Ullmanns Enzyklopädie der technischen Chemie, 4th edition, volume 21, page 464 et seq. (1982).

The metal content of the silicon dioxide according to the invention is in the ppm range and below (ppb range).

The highly pure pyrogenically prepared silicon dioxide which can be employed according to the invention can be prepared, for example, by vaporizing 500 kg/h SiCl₄ having a composition according to table 1 at approx. 90 ºC and transferring it into the central tube of a burner of known construction. 190 Nm³/h hydrogen and 326 Nm³/h air having an oxygen content of 35 vol.% are additionally introduced into this tube. This gas mixture is ignited and burns in the flame tube of the water-cooled burner. 15 Nm³/h hydrogen are additionally introduced into a jacket jet surrounding the central jet in order to avoid caking. 250 Nm³/h air of normal composition are moreover additionally introduced into the flame tube. After the reaction gases have cooled, the pyrogenic silicon dioxide powder is separated off from the hydrochloric acid-containing gases by means of a filter and/or a cyclone. The pyrogenic silicon dioxide powder is treated with water vapour and air in a deacidification unit in order to free it from adhering hydrochloric acid.

The metal contents are reproduced in table 2.

**Table 1: Composition of SiCl₄**

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| <1 | <30 | <5 | <0.1 | <0.2 | <0.1 | <0.5 | <1 | <1 | <0.1 | <0.2 | <1 | <0.2 | <0.5 | <1 | <0.5 |

**Table 2: Metal contents of the silicon dioxides (ppb)**

| | Example 2a | |
|---|---|---|
| [ppb] | | |
| Li | 0.8 | < = 10 |
| Na | 68 | < = 80 |
| K | 44 | < = 80 |
| Mg | 10 | < = 20 |
| Ca | 165 | < = 300 |
| Fe | 147 | < = 800 |
| Cu | 3 | < = 10 |
| Ni | 113 | < = 800 |
| Cr | 47 | < = 250 |
| Mn | 3 | < = 20 |
| Ti | 132 | < = 200 |
| Al | 521 | < = 600 |
| Zr | 3 | < = 80 |
| V | 0.5 | < = 5 |
| | | |
| | Σ 1,257 ppb = 1.26 ppm | Σ = 3,255 ppb = 3.2 ppm |

A pyrogenically prepared silicon dioxide powder having
- a BET surface area of 30 to 90 m²/g,
- a DBP number of 80 or less,
- an average aggregate area of less than 25,000 nm²,
- an average aggregate circumference of less than 1,000 nm, at least 70 % of the aggregates having a circumference of less than 1,300 nm,
can furthermore be used according to the invention as the pyrogenically prepared oxide of a metal and/or a metalloid.

This pyrogenically prepared silicon dioxide powder is known from WO 2004/054929.

In a preferred embodiment, the BET surface area can be between 35 and 75 m²/g. Values between 40 and 60 m²/g can be particularly preferred. The BET surface area is determined in accordance with DIN 66131.

In a preferred embodiment, the DBP number can be between 60 and 80. In the DBP absorption, the power uptake, or the torque (in Nm), of the rotating paddles of the DBP measuring apparatus on addition of defined amounts of DBP is measured, in a manner comparable to a titration. For the silicon dioxide which can be employed according to the invention, a sharply pronounced maximum with a subsequent drop at a particular addition of DBP results here.

In a further preferred embodiment, the silicon dioxide powder which can be employed according to the invention can have an average aggregate area of not more than 20,000 nm². An average aggregate area of between 15,000 and 20,000 nm² can be particularly preferred. The aggregate area can be determined, for example, by image analysis of the TEM images. In the context of the invention, aggregate is to be understood as meaning primary particles of similar structure and size which have fused together, the surface area of which is less than the sum of that of the individual isolated primary particles. Primary particles are understood as meaning particles which are initially formed in the reaction and can grow together to form aggregates in the further course of the reaction.

In a further preferred embodiment, the silicon dioxide powder which can be employed according to the invention can have an average aggregate circumference of less than 1,000 nm. An average aggregate circumference of between 600 and 1,000 nm can be particularly preferred. The aggregate circumference can likewise be determined by image analysis of the TEM images.

An embodiment in which at least 80 %, particularly preferably at least 90 % of the aggregates have a circumference of less than 1,300 nm can be preferred.

In a preferred embodiment, the silicon dioxide powder which can be employed according to the invention can assume, in an aqueous dispersion, a degree of filling of up to 90 wt.%. The range between 60 and 80 wt.% can be particularly preferred.

The determination of the maximum degree of filling in an aqueous dispersion is carried out by incorporating the powder into water in portions by means of a dissolver, without the addition of further additives. The maximum degree of filling is reached when, in spite of an increased stirrer output, either no further powder is taken up into the dispersion, i.e. the powder remains dry on the surface of the dispersion, or the dispersion becomes solid or the dispersion starts to form lumps.

The silicon dioxide powder which can be employed according to the invention can furthermore have a viscosity of less than 100 mPas, based on a 30 wt.% aqueous dispersion at a shear rate of 5 revolutions/minute. In particularly preferred embodiments, the viscosity can be less than 50 mPas.

The pH of the silicon dioxide powder which can be employed according to the invention, measured in a 4 per cent aqueous dispersion, can be between 3.8 and 5.

The silicon dioxide powder which can be employed according to the invention can be employed in the form of an aqueous dispersion.

The aqueous dispersion which can be employed according to the invention can have a content of silicon dioxide powder of between 20 and 80 wt.%. Dispersions having a content of silicon dioxide powder of between 40 and 60 can be particularly preferred. These dispersions have a high stability with a comparatively low structure. A dispersion of approx. 50 wt.% can be very particularly preferred.

In a sol-gel process using fumed silica particles, wherein a first sol is formed by dispersing the fumed silica particles in water to prevent cracking, gelled, dried, and powdered, and a second sol is formed by thermally treating the silica powder and re-dispersing the thermally treated silica powder in water, gelled, dried, and sintered, so that the thus-obtained powder particles are larger than the original powder particles, the size of pores among the particles is increased, and a crack-free silica glass monolith is obtained. When fabricating a large glass monolith in the above process, even the two sol dispersion steps cannot prevent cracking during the drying steps, and a long time is required to gel the first sol.

Subject of the present invention is to provide a silica glass monolith fabricating method using a sol-gel process, which can remarkably reduce a time required to reach a second sol dispersion step by rapidly drying a first sol without a gelation step through control of the pH of the first sol.

Subject of the present invention is to provide a silica glass monolith fabricating method using a sol-gel process, which can prevent cracking caused by capillary pressure during a drying step by increasing the size of powder particles and thus the size of pores among the particles.

Further the subject of the present invention is to provide a silica glass monolith fabricating method using a sol-gel process, which can prevent cracking during a second sol drying step by adding an appropriate amount of aqueous organic compound during the second sol drying step.

To achieve the above objects, there is provided a silica glass monolith fabricating method using a sol-gel process.

The method for fabricating a silica glass monolith using a sol-gel process can comprise the steps of:
- forming a first sol by mixing 100 parts by weight of pyrogenically produced silica called fumed silica, with 100-300 parts by weight of deionized water, while controlling the pH of the first sol in the range between 9 and 11;
- rapidly drying the first sol in a microwave oven/drier;
- grinding (in a ball mill) and classifying the dried first sol to form a powder;
- thermally treating the powder at or above 600 °C;
- forming a second sol by mixing 100 parts by weight of the thermally-treated powder with 100-200 parts by weight of deionized water;
- pouring the second sol in a mold;
- gelling the second sol in said mold to form a gel;
- removing the gel from the mold;
- drying the gel; and
sintering the dried gel to form a high-purity silica glass monolith.

A step of adding an aqueous organic binder to the second sol to prevent cracking during the drying of said gel can be done.

The aqueous organic binder can comprise of polyvinyl alcohol.

The sintering step can comprise the steps of:
- thermally treating, at a temperature of 1100 °C or less, said dried gel in a low temperature furnace and removing an OH group from said dried gel by utilizing Cl gas;
- removing remaining Cl and said aqueous organic binder by utilizing He gas; and glassifying said dried gel in a high temperature furnace.

The second sol can undergo a ball mill treatment in a ball mill during said step of forming a second sol.

### Example 1

A first sol, containing by weight 25% of silica, is formed by mixing 2200 g of fumed silica powder having a specific surface area of 50 m²/g and containing high-density silica with 6600 g of deionized water and 50 ml of 28% ammonia liquid. To obtain a homogeneous first sol, they are mixed with 18 kg of silica balls having a diameter of 10 mm in a ball mill at 90 rpm for 24 hours. Then, the first sol is dried in a drier at 120 °C for 24 hours, ground, classified in a 20 mesh sieve, and thermally treated at 1100 °C for one hour in a heat treatment furnace having a temperature rising speed of 300 °C/hr. The thermally-treated powder is mixed with deionized water at a weight ratio of 1:1.2, blended for 15 minutes, and treated for 24 hours with additional 20 g of polyvinyl alcohol in the ball mill under the same conditions as for the first ball mill treatment. Here, 4.4 g of ammonium fluoride is added to the resulting mixture 20 minutes before the second ball mill treatment is completed. Then, the formed sol is gelled in a mold for 48 hours. The mold is formed of teflon and divided into an upper portion, a lower portion, an outer tube-shaped portion, and a central rod. The dimensions of an object moldable by the mold are an inner diameter of 35 mm, an outer diameter of 71 mm, and a length of 1.3 m. After gelation, the rod is removed from the mold, the gel is dried in the mold for 2-3 days, and the mold is then detached from the gel. The tube-shaped gel is dried at room temperature and at a relative humidity of 80% for 10 days, at 40 °C for 24 hours, at 60 °C for 24 hours, and then at 80 °C for 24 hours. Remaining moisture and organic material are removed from the dried gel at 900 °C for 5 hours in a heat treatment furnace having a temperature rising speed of 100 °C/hr. The thermally-treated gel is glassified in a furnace with an atmosphere of He and Cl gases. Here, dehydroxylation and glassification are performed at 600-1000 °C for 5 hours and at 1400 °C for one hour, respectively. The glassified and sintered tube has an inner diameter of 21 mm, an outer diameter of 41 mm, and a length of 1 m, and shows a shrinkage rate of about 25%.

As describe above, the silica glass monolith fabricating method using a sol-gel process according to the present invention reduces a processing time by rapidly drying a first sol without a gelation step and suppresses cracking during a drying step by adding an aqueous organic binder.

In addition, the first sol is very rapidly dried without the first gelation step and thus a time required to reach the second sol dispersion step is reduced because the first sol is formed while its pH is being controlled to be alkaline with an additional alkaline material. The first sol is formed from original powder, dried, and thermally treated so that the size of powder particles and thus the size of pores among the particles are increased. As a result, capillary pressure-induced cracking is prevented during the drying step. Furthermore, the pore size and the adhesion force between particles are controlled by adding an appropriate amount of aqueous organic binder during the second gel drying step, thereby preventing possible cracking during the second gel drying step.

It is an object of the present invention to provide an improved process for manufacturing silica glass.

It is yet another object to provide a process for using original fumed silica power in the manufacture of high-density, high-purity silica glass.

These and other objects may be attained according to the principles of the present invention with a high-purity silica glass fabrication technique using a sol-gel process. A first sol may be formed by mixing approximately one hundred parts by weight of fumed silica powder with between approximately one hundred and three hundred parts by weight of deionized water. The first sol may be gelled, dried, powdered, and thermally treated. A second sol may then be formed by mixing the thermally-treated first sol with between approximately one hundred and two hundred parts by weight of deionized water and between approximately twenty and fifty parts by weight of non-thermally treated original fumed silica powder. The second sol may then be gelled, dried, and sintered. Thus, a high-purity silica glass is formed.

### Example 2

A first sol containing about twenty-five percent by weight of silica is formed by mixing 2000 grams of fumed silica powder having a specific surface area 50 m²/g with 6000 grams of deionized water. To obtain a homogeneous first sol, the mixing process is performed in a ball mill at about 90 rpm for about twenty-four hours by adding 16 kilograms of silica balls having a diameter of 10 mm. Then, the first sol is gelled, and moisture is vaporized from the gel at 120 °C for about twenty-four hours in a drier. The dried silica is ground, classified by a mesh sieve, and thermally treated at 1100 °C for one hour in a heat treatment furnace having a temperature rising speed of 300 °C/hour. A second sol is then formulated as the thermally treated powder is blended with water at a weight ratio of 1:1.2 for about fifteen minutes, and mixed with an additional 20 grams of polyvinyl alcohol for about twenty-four hours in the ball mill under the same condition for forming the first sol. Then, the thus-formed second sol is mixed with 400 grams of non-thermally treated fumed silica powder, 400 grams of deionized water, and 4.8 grams of ammonium fluoride for about six hours in the ball mill. The sol is poured into a mold and gelled for about twenty-four hours. Here, the mold is formed of teflon and divided into an upper portion, a lower portion, a tube-shaped outer portion, and a central rod. The dimensions of an object moldable by the mold are about 35 nm in inner diameter, 71 nm in outer diameter, and 1.3 meters in length. Then, the central rod is removed and the sol in the mold is dried for approximately two to three days at room temperature and a relative humidity of about 80%. Then, the mold is removed and the tube-shaped gel is dried for about ten days at a relative humidity of 80%. The tube-shaped gel is dried for about twenty-four hours at 30 °C, for about twenty-four hours at about 40 °C and then for about twenty-four hours at 50 °C. Then, remaining moisture and an organic material are removed from the dried gel by heating the gel for about five hours at about 900 °C in a heat treatment furnace having a temperature rising speed of about 100 °C/hour. Subsequently, a high-purity silica glass tube is formed by classifying the thermally treated gel at an atmosphere of helium and chlorine gases in a furnace. Here, dehydroxylation and classification are performed at a temperature between approximately 600-1000 °C for about five hours and at about 1400 DEG C. for about one hour, respectively.

Various values (e.g., weight ratio, weight, temperature) described in the embodiments of the present invention are exemplary, and thus can be varied.

Furtheron the invention is concerned with the economical fabrication of a variety of products entailing sol-gel produced high silica glass. In broad terms, the inventive advance is low-cost. Resulting product may have properties equal to those of product as produced by more expensive methods. The same consideration may, however, dictate use of silica glass, as now economically feasible, in lieu of other material, e.g., of low melting mixed oxide glass, to, in turn, manifest improved properties.

The method for fabricating a glass monolith at least in part composed of high silica glass can include the following steps:
- fabricating a high-silica glass body by a method comprising gelling a sol, the sol comprising a suspension of colloidal silica particles in a suspension medium, so resulting in a gel,
- drying the gel so as to substantially remove such suspension medium, and
- firing such gel to produce a high-silica glass body,
- characterized in that the said sol, during a substantial part of such gelling, contains additive including a first additive consisting essentially of at least one organic polymer, such polymer being characterized as:

- (1) of amount sufficient to monomolecularly coat from 5% to 50% of the total free surface of such colloidal silica particles,
- (2) of solubility as to result in substantially complete solution in the said sol prior to gelation,
- (3) of such nature as to wet the said silica particles,
- (4) of such composition as to thermally decompose primarily to gaseous decomposition product so that fired product is substantially free of such polymer as well as of decomposition product constituting a meaningful contaminant deleteriously affecting performance of such article.

The suspension medium can be aqueous, and in which gelation can entail reducing the pH of the sol.

The said particles can have a maximum surface area of 100 square meters per gram, in which the amount of silica in the sol can be at least 30 weight percent as based on the sol, and in which the pH of the sol prior to gelation at some time can attain a value of at least 9.5.

The attained value of at least 9.5 prior to gelation can be assured by inclusion of a pH-increasing ingredient in the sol, and in which reducing pH can be at least in part due to addition of a pH-decreasing ingredient to the sol.

The sol can be introduced into a mold within which gelation takes place, in which the pH-decreasing ingredient can be added to the sol prior to introduction of the sol into the mold, and in which the pH-decreasing ingredient can consist essentially of an ester whereby rate of gelation can be controlled.

The wetting can comprise reversible chemisorption, and in which the mold can define a cavity of shape to result in a near net shape molded body upon gelation.

The said sol, during a substantial part of said gelation, can contains second additive consisting essentially of a polyhydric alcohol.

The amount of sol as introduced into the mold can be sufficient to result in a high silica glass body of a weight of at least 1 kilogram.

The said polymer can be primarily aliphatic and can consist primarily of atoms selected from the group consisting of carbon, hydrogen, oxygen, and nitrogen, and in which the molecular weight of such polymer can be of a maximum value of 1 million.

The sol can include a second additive which consists essentially of a polyhydric alcohol.

The second additive can be glycerin.

The pH-increasing ingredient can be at least one quaternary ammonium hydroxide.

The pH-increasing ingredient can be at least one compound selected from the group consisting of tetramethylammonium hydroxide and tetraethylammonium hydroxide.

The pH-reducing ingredient can consist essentially of a water soluble aliphatic ester of an acid selected from the group consisting of formic acid, lactic acid, and glycolic acid.

The article can be optical fiber, in which the high-silica glass body yields a substantial portion of such fiber, the said method can comprise drawing such fiber from a fiber preform comprising such body.

High-yield, low-cost, preparation of product entailing larger, near-net shape, crack-free silica bodies can be realized by casting from a sol of colloidal silica in water. The common feature of contemplated species is freedom from cracking, in turn, to result in improved yield, and, consequently, in lowered cost. In addition, the inventive procedures permit minimization of retained voids - of particular consequence for assuring transparency required for optical purposes. While generally of somewhat lesser consequence for non-optical use, this aspect of the invention results, too, in advantages in structural integrity.

With regard to product requiring optical properties - optical fiber, prisms, lenses, and the like - product may be of operating characteristics hitherto requiring more expensive processing. Similar considerations apply to product appearance - as related to transparency or simply to freedom from visible defects. In other instances, properties due to use of cost-dictated less expensive materials are improved without cost increase by reason of the now-permitted substitution of silica glass.

The procedure begins with preparation of the sol - an aqueous dispersion of silica particles. In exemplary procedures, stabilization of the sol is ascribed to electrostatic forces accompanied by high pH. A number of quaternary ammonium hydroxides are useful for such electrostatic stabilization. Gelation is, in this instance, the consequence of deliberate charge balancing accompanied by pH reduction. Introduction of positive charge, e.g. by adsorption of positive ions by the particles, dissipates the space charge and allows the silica particles to coalesce under the influence of, e.g., attractive van der Waals forces.

In general terms, the inventive advance assures high yield of crack-free silica bodies - of bodies largely consisting of silica. In terms of a primary thrust, discussion is directed to production of large sol gel bodies which are both crack-free and void-free at a level to assure desired properties of articles formed from such bodies - e.g., properties of optical fiber made from preforms including such bodies.

The major thrust of the invention concerns minimization of defect introduction primarily as traceable to the sol and during gelation. While the precise mechanism responsible for defect introduction at the sol-gel stage is not directly observable, experimental results associate the problem with the nature of particle-to-particle contact.

Significant yield improvement is the consequence of what is here referred to as "binder". The inventive advance depends upon incorporation of an organic polymer. Polymer is chosen, inter alia, to be removable without costly additional processing - a need which, in accordance with usually contemplated processing temperatures is met by decomposition in air to yield chemically benign gaseous product at temperatures used in processing, e.g. of the order of 300 DEG C.

Another major impetus is economics with preservation of properties associated with more expensive fabrication techniques. It is a significant feature of the invention that use may be made of standard commercial materials, e.g. of purity satisfactory for non-demanding uses. For example, the starting fumed silica is of grade and cost as used in manufacture of floor waxes or for lessening gloss as a shellac or paint additive, etc.

For purposes of shipping and storage, stable aqueous sol of fumed silica particles may contain small amounts of organic base material such as Tetra Methyl Ammonium Hydroxide. In general, the amount of base so included is insufficient to result in pH within the range of from 11 to 14 as preferred for successful formation of large shaped gel bodies.

Polymer added constitutes the first additive as required in accordance with the teaching. While set forth.

Glycerin is exemplary of the class of low molecular weight surface modifiers constituting second additive and an important part of the inventive teaching.

### Example 3

In this example, a overcladding tube was prepared from a 2500 gram aqueous dispersion of fumed silica. The dispersion contained 46 wt.% colloidal silica having a surface area of approximately 50 m/g. The particle size distribution centered about 50 nm diameter and extended from 5 nm to 100 nm. To the dispersion, a quantity of tetramethylammonium hydroxide (TMAH), (2.8 wt.% based on SiO₂ - both as dry weight) dissolved in water (25 wt.%), was added. This raised the pH to approximately 12 and stabilized the sol against gelation and settling. After twenty hours, 0.21 wt.% polyethyloxazoline of molecular weight APPROX 50,000 (measured by gel permeation chromatography with polystyrene standard) and glycerin (0.87 wt% both based on SiO₂) were added and mixed with the sol. Methyl formate (2.1 wt.% based on SiO₂) was added and the sol was immediately poured into a mold.The mold consisted of an acrylic tube and concentric stainless steel rod, together providing for a tubular casting of dimensions 63.5 mm OD x 28.6 mm ID x 1 meter long. The sol gelled within ten minutes after the ester was added. The pH decreased to a value in the 9.6-9.7 range over a ten minute period following addition of the formate to result in substantially complete gelation.

The gel tube was removed from the mold and dried horizontally on rotating 2.5" diameter rollers spaced at 3". Rotation at 1 rpm for a period of two weeks within a loosely closed box yielded an unwarped dried tube, 25.1 mm ID x 55.6 mm OD x 844 mm long (corresponding to shrinkage of 12.4%). The reported results were obtained at room temperature and relative humidity of APPROX 80%.

The dried tube was placed in a fused quartz firing shroud. The firing shroud was supported on an elevator which moved the sample vertically through a 12" long furnace hot zone. During firing, the body was supported by a 19 mm rod which extended 11.3 cm into the center hole of the unsintered tube. The sample was positioned above the hot zone in a flowing atmosphere of He, O₂ and Cl₂ while the furnace was heated to the dehydroxylation temperature of 1000 °C. The furnace was maintained at this temperature for 16 hours while the sample was slowly lowered through it. With the sample at the bottom, the furnace temperature was increased to 1400 °C and the sample was consolidated by raising it through the hot zone. As a result of consolidation, the tube shrank an additional 27%, reducing its internal diameter to 18.3 mm, thus fusing the tube to the 19 mm support rod.The fused portion, APPROX 8 cm long, was removed, leaving a tube of length APPROX 59 cm.

### Example 4

A series of overcladding tubes were prepared from 3000 gm batches of sol (46 wt% SiO₂ in water) stabilized by 152 gm of a 25 wt.% aqueous solution of TMAH. Polyethyloxazoline 2.4 gm, APPROX 50,000 mw, in 20 gm of water, together with 12 gm of glycerin were added and mixed. After aging overnight, the sols were cooled, 24 gms of methyl formate was added, and the two were mixed using a high shear mixer. These were cast into 2 1/2" I.D. molds with 1" O.D. core mandrels.

After standing for approximately 16 hours, the core mandrels were removed and shortly thereafter, the gel bodies were pushed out of the molds on to rollers, while immersed in a tank of water. Each gel cylinder and the two rollers on which it rested were placed in an environment controlled cabinet. Here, while rotating at about 0.2 RPM, the cylinder dried for about seven days at 15 DEG C and 80% relative humidity. The resulting porous silica bodies were stored for varying periods of time before firing.

Each tube was first prefired by heating to 150 °C over 24 hours. This removed up to 5% of the mass, largely water and organic residues. The dried body was now supported in a firing shroud described earlier. A central "hanging tube" was inserted to a 2" depth into the top of the porous silica tube and the assembly was placed at the bottom of a vertical tube furnace. The shroud and sample were now positioned with its top in the furnace hot zone, and the zone temperature was raised to 1000 °C over a period of 14 hours. The atmosphere in the chamber was controlled by a flow of gas containing 7% O₂ and from 0.8 to 1.7% Cl₂ in He (total flow = 1400 sccm/min). When the hot zone reached 1000 °C the sample was raised, using an elevator, through the hot zone in 10 hours. The atmosphere was changed to 7% O₂, 93% He, and the sample was lowered to the bottom in the same time period.The temperature of the furnace was now raised to 1475 °C, the atmosphere was changed to all He and the sample was consolidated as it rose to the top of the furnace in 5 hours.

### Example 5

A tube was made starting with 3500 grams of silica sol (46 wt.% SiO₂). To this was added 179 grams of 25% aqueous TMAH and 5.4 grams of polyethylazoline (average molecular weight 50,000) dissolved in 25 grams of water. These were mixed for five minutes in a high shear mixer and then aged overnight at room temperature. Next, the sol was cooled to 10 °C, and 26 grams of methyl formate was added while mixing. After forty-five seconds, the sol was transferred to a cylindrical acrylic mold containing an axially centered stainless steel rod, together defining a 63.5 x 25.4 mm annular cavity. The free space in the mold was evacuated to a few torr to rid the sol of trapped air. The vacuum was removed and the mold was closed. Gelation was substantially complete in fifteen minutes.

The central mandrel was removed after two hours, and the gel body was pushed from the mold onto rollers. The gel cylinder was now dried while rotating at one revolution per hour in 80% relative humidity 20 °C ambient. After ten days, when approximately 97% of the water had been removed, the sample was heated slowly to 120 °C in air and was maintained at that temperature overnight. It was then cooled and placed in a firing shroud. After the intermediate heating of Table step 11, the assembly was now heated to 1000 °C while once raising and lowering the sample over a ten hour period through a twelve inch hot zone in the furnace. The atmosphere over the sample was maintained at 4% chlorine, 6% oxygen and 90% helium during this firing.Next, the furnace temperature was raised to 1475 °C, the atmosphere was changed to all helium, and the sample was passed through the hot zone over a five-hour period.

### Example 6

An overcladding tube was prepared under conditions to demonstrate down-doping of gel-derived silica. The tube was prepared by a process similar to that of Example 4: 2,750 gms of sol were mixed with 133 gms of (25%) aqueous TMAH. Into this mixture 20 gms of glycerin together with 3.3 gms of Magnifloc 581-C, (a product of American Cyanamid Co., Wayne, N.J.) were added. After overnight equilibration, 28 gms of methyl formate was added and the sol was cast in the mold described in Example 4. The gelled body was removed from the mold and dried as in the previous example. It was then dried and fired according to the following schedule:
Ramp to 120 °C in He 0.5 hr
Hold at 120 °C in He 0.5 hr
Ramp to 1000 °C in 85% He, 10% O₂, 5% Cl₂ in 11 hrs.
Raise sample at 1000 °C to 85% He, 10% O₂, 5% Cl₂ in 10 hrs.
Change atmosphere at 1000 °C to 92.2% He, 5.6% Cl₂, 2.2% SiF₄
Lower sample at 1000 °C in 92.2% He, 5.6% Cl₂, 2.2% SiF₄ in 10 hrs.
Ramp to 1400 °C in 97.6% He, 2.4% SiF₄ in 2 hrs.
Raise sample at 1400 °C in 97.6% He, 2.4% SiF₄ in 5 hrs.

The resulting silica tube had a depressed index: 1.4526 (0.006 units below that of silica). The tube was approximated 50 cm long with an OD of 44 mm and an ID 18 mm.

### Example 7

A formulation for the preparation of overcladding tubes included 2500 gram of silica sol (46 wt% SiO₂), 121 grams of 25 wt.% TMAH in water, 3.2 grams of polyethyloxazoline in 26.8g of water, and 15 grams of glycerin. After aging the sol overnight, 41.2 grams of methyl glycolate was added to the sol. The sol was cast as in Example 4, and gelation occurred in about 35 minutes at room temperature. One such gel body was dried in the identical manner described in Example 4. Upon firing, according to the schedule of Example, 4, a a crack-free transparent tube was obtained.

### Example 8

A formulation for the preparation of overcladding tubes included 2500 grams of silica sol (46 wt.% SiO₂), 125 grams of 25 wt.% aqueous tetraethylammonium hydroxide, 3.2 grams of polyethyloxazoline in 26.8 grams of water, and 15 grams of glycerin. After aging the sol overnight, the sol was cooled in an ice-bath, and 25 grams of methyl formate was added with vigorous stirring (as used upon addition of pH-lowering ester in all of the examples). Gelation occurred in about 20 minutes. A gel body was cast, dried and fired as described in Example 4. Upon firing, a clear crack-free silica tube was obtained.

### Example 9

A formulation for the preparation of overcladding tubes included 2500 grams of silica sol (46 wt% SiO₂), 121 grams of 25 wt.% aqueous TMAH, 3.2 grams of polyethyloxazoline in 26.8 grams of water, and 15 grams of glycerin. After aging the sol overnight, 47.7 grams of methyl lactate was added to the sol with vigorous stirring. Gelation occurred in about 50 minutes at room temperature. The gel was cast and dried in the manner described in Example 4. Upon firing, a clear crack-free silica tube was obtained.

### Example 10

A formulation for the preparation of overcladding tubes included 2500 grams of silica sol (46 wt.% SiO₂), 121 grams of 25 wt.% aqueous TMAH solution, 3.2 grams of polyethyloxazoline in 26.8 grams of water, and 15 grams of glycerin. After aging the sol overnight, 54.1 grams of ethyl lactate was added to the sol with vigorous stirring. Gelation occurred in about 60 minutes at room temperature. The gel body was produced by casting and drying in the manner described in Example 5. Upon firing, a clear crack-free silica tube was obtained.

## Claims

1. Method for fabricating a glass-monolith by the sol-gel process, in which a pyrogenically produced silica (fumed silica) is used in the form of a powder and/or a dispersion, **characterized in that** as pyrogenically produced silica (fumed silica) a silica (fumed silica) deriving from the group
- highly pure, pyrogenically produced silica (fumed silica) with a metal content of lower than 9 ppm and/or
- a pyrogenically prepared silicon dioxide powder having
- a BET surface area of 30 to 90 m²/g,
- a DBP number of 80 or less,
- an average aggregate area of less than 25,000 nm²,
- an average aggregate circumference of less than 1,000 nm, at least 70 % of the aggregates having a circumference of less than 1,300 nm
is used.

2. Method for fabricating a silica glass monolith using a sol-gel process according to claim 1, the method comprising the steps of:
- forming a first sol by mixing 100 parts by weight of pyrogenically produced silica called fumed silica, with 100-300 parts by weight of deionized water, while controlling the pH of the first sol in the range between 9 and 11;
- rapidly drying the first sol in a microwave oven/drier;
- grinding (in a ball mill) and classifying the dried first sol to form a powder;
- thermally treating the powder at or above 600 °C;
- forming a second sol by mixing 100 parts by weight of the thermally-treated powder with 100-200 parts by weight of deionized water;
- pouring the second sol in a mold;
- gelling the second sol in said mold to form a gel; removing the gel from the mold;
- drying the gel; and
- sintering the dried gel to form a high-purity silica glass monolith.

3. The method as set forth in claim 2, further comprising a step of adding an aqueous organic binder to the second sol to prevent cracking during the drying of said gel.

4. The method as set forth in claim 3, wherein said aqueous organic binder is comprised of polyvinyl alcohol.

5. The method as set forth in claim 3, wherein said sintering step comprises the steps of:
- thermally treating, at a temperature of 1100 °C or less, said dried gel in a low temperature furnace and removing an OH group from said dried gel by utilizing Cl gas;
- removing remaining Cl and said aqueous organic binder by utilizing He gas; and glassifying said dried gel in a high temperature furnace.

6. The method as set forth in claim 2, wherein said second sol undergoes a ball mill treatment in a ball mill during said step of forming a second sol.

7. Method for fabricating a glass monolith at least in part composed of high silica glass according to claim 1 including
- fabricating a high-silica glass body by a method comprising gelling a sol, the sol comprising a suspension of colloidal silica particles in a suspension medium, so resulting in a gel,
- drying the gel so as to substantially remove such suspension medium, and
- firing such gel to produce a high-silica glass body,
- **characterized in that** the said sol, during a substantial part of such gelling, contains additive including a first additive consisting essentially of at least one organic polymer, such polymer being **characterized** as:
- (1) of amount sufficient to monomolecularly coat from 5% to 50% of the total free surface of such colloidal silica particles,
- (2) of solubility as to result in substantially complete solution in the said sol prior to gelation,
- (3) of such nature as to wet the said silica particles,
- (4) of such composition as to thermally decompose primarily to gaseous decomposition product so that fired product is substantially free of such polymer as well as of decomposition product constituting a meaningful contaminant deleteriously affecting performance of such article.

8. Method of claim 7 in which the suspension medium is aqueous, and in which gelation entails reducing the pH of the sol.

9. Method of claim 7 in which the said particles have a maximum surface area of 100 square meters per gram, in which the amount of silica in the sol is at least 30 weight percent as based on the sol, and in which the pH of the sol prior to gelation at some time attains a value of at least 9.5.

10. Method of claim 9 in which the attained value of at least 9.5 prior to gelation is assured by inclusion of a pH-increasing ingredient in the sol, and in which reducing pH is at least in part due to addition of a pH-decreasing ingredient to the sol.

11. Method of claim 8 in which the sol is introduced into a mold within which gelation takes place, in which the pH-decreasing ingredient is added to the sol prior to introduction of the sol into the mold, and in which the pH-decreasing ingredient consists essentially of an ester whereby rate of gelation is controlled.

12. Method of claim 11 in which wetting comprises reversible chemisorption, and in which the mold defines a cavity of shape to result in a near net shape molded body upon gelation.

13. Method of claim 7 in which said sol, during a substantial part of said gelation, contains a second additive consisting essentially of a polyhydric alcohol.

14. Method of claim 11 in which the amount of sol as introduced into the mold is sufficient to result in a high silica glass body of a weight of at least 1 kilogram.

15. Method of claim 7 in which the said polymer is primarily aliphatic and consists primarily of atoms selected from the group consisting of carbon, hydrogen, oxygen, and nitrogen, and in which the molecular weight of such polymer is of a maximum value of 1 million.

16. Method of claim 13 in which second additive is glycerin.

17. Method of claim 10 in which the pH-increasing ingredient is at least one quaternary ammonium hydroxide.

18. Method of claim 17 in which the pH-increasing ingredient is at least one compound selected from the group consisting of tetramethylammonium hydroxide and tetraethylammonium hydroxide.

19. Method of claim 11 in which the pH-reducing ingredient consists essentially of a water soluble aliphatic ester of an acid selected from the group consisting of formic acid, lactic acid, and glycolic acid.

20. Method according to claim 1 in which the article is optical fiber, in which the high-silica glass body yields a substantial portion of such fiber, the said method comprising drawing such fiber from a fiber preform comprising such body.
